# FASCICULE DE BREVET EUROPEEN

(11) **EP 0 846 273 B1**
(45) Date de publication et mention de la délivrance du brevet: **23.06.1999**
(21) Numéro de dépôt: 96922729.7
(22) Date de dépôt: 26.07.1996
(51) Int. Cl.: G01S 13/02, H02M 7/10, G06K 7/00

(54) **DISPOSITIF D'INTERFACE RADIOFREQUENCE POUR TRANSPONDEUR**
FUNKFREQUENZSCHNITTSTELLENVORRICHTUNG FÜR TRANSPONDER
RADIOFREQUENCY INTERFACE DEVICE FOR A TRANSPONDER

(30) Priorité: 02.08.1995 FR 9509414
(43) Date de publication de la demande: 10.06.1998
(73) Titulaire: EM Microelectronic-Marin SA, 2074 Marin (CH)
(72) Inventeur: BÜSSER, Wolfgang, F-06250 Mougins (FR)
(74) Mandataire: Balsters, Robert
(86) Numéro de dépôt international: CH9600268
(87) Numéro de publication internationale: WO9705504

(56) Documents cités:
- US-A- 3 478 258
- US-A- 4 075 632
- US-A- 4 196 418
- ELECTRONIC ENGINEERING, vol. 44, no. 530, Avril 1972, LONDON (GB), page 52 XP002000677 B. GLEDHILL: "Voltage Multipliers"

## Description

La présente invention concerne l'interface radiofréquence d'un transpondeur, et notamment le circuit convertisseur de tension d'une telle interface.

L'invention s'applique en particulier à l'interface radiofréquence d'un transpondeur utilisé comme dispositif d'identification sans contact.

Les dispositifs de ce type comportent une antenne électromagnétique sous la forme d'une bobine inductive de très faibles dimensions, connectée en entrée/sortie à un circuit intégré à travers un circuit convertisseur de tension, fournissant la tension d'alimentation continue du circuit intégré.

Les transpondeurs de ce type sont dépourvus de batterie et sont destinés à échanger des données avec un dispositif d'interrogation ou d'identification auquel ils ne sont pas reliés par une liaison filaire. La tension d'alimentation dont le transpondeur a besoin pour fonctionner est par conséquent obtenue à partir d'un signal d'excitation radiofréquence émis par le dispositif d'interrogation. Ce signal radiofréquence est redressé dans le transpondeur et la tension ainsi produite est utilisée pour charger un condensateur constituant un moyen de stockage d'énergie. L'énergie ainsi stockée est utilisée par les circuits du transpondeur pour y écrire des informations dans des circuits logiques, notamment des mémoires, et pour moduler un signal radiofréquence de réponse destiné à la lecture du transpondeur par le dispositif d'interrogation.

Un tel dispositif transpondeur est décrit dans le document US A-4,196,418. Ce dispositif comporte à cet effet un circuit redresseur permettant de redresser et donc d'utiliser la tension du circuit résonateur pour alimenter les différents composants du dispositif.

De tels transpondeurs peuvent en pratique être utilisés dans une grande variété d'applications, notamment pour l'identification d'objets à distance.

Dans ce contexte, un des problèmes posés réside dans le fait que la tension d'entrée de l'interface du transpondeur détermine la distance limite de fonctionnement, c'est-à-dire la distance maximale acceptable entre l'émetteur ou le récepteur d'un signal électromagnétique et le transpondeur pour permettre l'échange de données entre la source et le transpondeur. De ce fait, pour augmenter la distance de fonctionnement, il est connu dans l'état de la technique d'utiliser un doubleur de tension en sortie du circuit redresseur, mais dans ce cas, les diodes redresseuses de l'interface risquent de claquer à cause de la trop grande tension inverse causée par ce doubleur.

La présente invention a pour but de remédier à ces inconvénients, et de proposer un dispositif d'interface apte à augmenter la distance de fonctionnement tout en évitant qu'une tension inverse importante soit appliquée aux diodes redresseuses de l'interface. De plus, l'invention a pour but de proposer un dispositif permettant l'incorporation de circuits standards de protection, ce qui n'est pas possible avec un doubleur de tension classique.

Un autre but de l'invention est de proposer une interface de transpondeur apte à générer un courant suffisant pour que le transpondeur puisse recevoir un microprocesseur ou d'autres circuits intégrés ayant une consommation de courant relativement élevée, notamment une mémoire non volatile.

A cet effet, l'invention a pour objet une interface radiofréquence de transpondeur, comportant une bobine formant l'antenne du transpondeur et un circuit convertisseur de tension connecté d'une part aux bornes de ladite bobine et d'autre part aux bornes d'alimentation en tension continue d'un circuit logique intégré du transpondeur, caractérisé en ce que les bornes de la bobine sont connectées à des potentiels flottants par rapport au substrat du transpondeur, de sorte que le potentiel d'aucune des bornes de la bobine ne passe en-dessous du potentiel du substrat, et en ce que ledit convertisseur de tension est un tripleur de tension qui comporte un premier redresseur connecté aux bornes de la bobine et constitué par une première diode en série avec un premier condensateur, un second redresseur connecté aux bornes de la première diode et constitué par une seconde diode en série avec un second condensateur, et un troisième redresseur connecté entre aux bornes du premier condensateur et constitué par une troisième diode en série avec un troisième condensateur.

Selon d'autres caractéristiques de l'invention :
- l'interface comporte un transistor de modulation dont le drain et la source sont connectés entre les bornes de la bobine, et dont la grille est alimentée par un signal de modulation issu du circuit intégré du transpondeur.
- ledit transistor de modulation est connecté en série avec une résistance, de sorte que le courant de la bobine varie rapidement de façon à moduler le champ radiofréquence.
- avantageusement, une diode de substrat est connectée entre une borne de la bobine et le substrat du transpondeur, en parallèle auxdites premières et secondes diodes, de façon à diminuer la chute de tension d'écriture de l'ordre de 0,7V.
- de préférence un condensateur est connecté aux bornes de la bobine, de façon à former un circuit résonant améliorant la transmission d'énergie entre le transpondeur et un lecteur extérieur.

L'invention concerne également un dispositif transpondeur comportant un dispositif d'interface ayant l'une quelconque des caractéristiques précédentes.

L'invention sera mieux comprise à la lecture de la description détaillée qui suit, en combinaison avec les dessins dans lesquels :
- la figure 1 est un schéma de principe représentant les principaux blocs fonctionnels d'un transpondeur;
- la figure 2 est un schéma de l'interface d'entrée/sortie d'un transpondeur de l'état de la technique, utilisant un redresseur à pont de Gräetz;
- la figure 3 est un schéma de l'interface d'entrée/sortie d'un transpondeur selon l'état de la technique, utilisant un étage redresseur à doubleur de tension;
- la figure 4 est un schéma d'un premier mode de réalisation de l'interface radiofréquence selon l'invention, destinée à être utilisée avec un transpondeur;
- la figure 5 est un schéma d'un second mode de réalisation de l'interface radiofréquence selon l'invention;
- la figure 6 est un schéma d'un troisième mode de réalisation de l'interface d'entrée/sortie selon l'invention;
- la figure 7 est une représentation en fonction du temps du signal d'entrée sinusoïdal disponible à l'entrée de l'interface des figures 4 à 6;
- la figure 8 est une représentation en fonction du temps de la tension redressée disponible à la sortie de l'interface des figures 4 à 6.

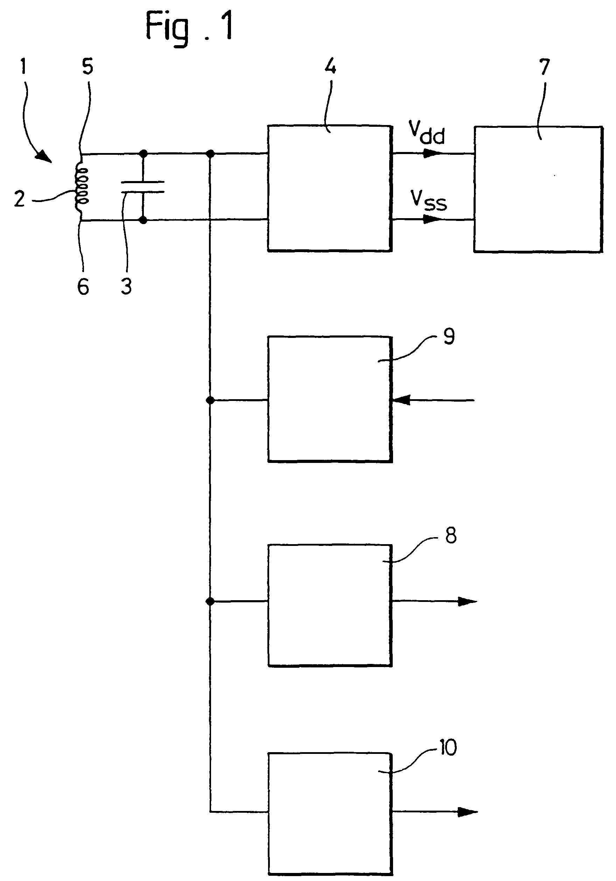

On se réfère à la figure 1. On a représenté dans cette figure un schéma de principe faisant apparaître les principaux blocs fonctionnels d'un transpondeur, et en particulier de son interface radiofréquence 1. Une telle interface comporte une antenne sous la forme d'une bobine 2 de faibles dimensions, connectée de préférence en parallèle à un condensateur 3, et à l'entrée d'un étage convertisseur de tension 4 qui permet de transformer la tension d'entrée alternative disponible aux bornes 5,6 de la bobine 2, en une tension continue (Vdd-Vss) permettant d'alimenter un bloc de circuits logiques 7 du transpondeur, constitué par exemple par une mémoire ou un microprocesseur. Le signal d'entrée disponible aux bornes de la bobine 2 est également démodulé, dans le sens de l'écriture, par un bloc de démodulation 8 pour écrire des informations de données vers les circuits intégrés 7 du transpondeur. De façon symétrique, les données destinées à être lues à partir du transpondeur sont modulées par un bloc de modulation 9 alimentant la bobine 2 pour la lecture des données à partir du transpondeur par un dispositif d'identification sans contact (non représenté).

Enfin, le signal d'écriture vers le transpondeur est utilisé par un bloc de récupération d'horloge 10 permettant de générer un signal d'horloge pour les circuits logiques 7 du transpondeur, synchrone du signal d'horloge du dispositif de reconnaissance externe.

L'invention concerne plus particulièrement le convertisseur de tension 4 de l'interface radiofréquence 1 du transpondeur.

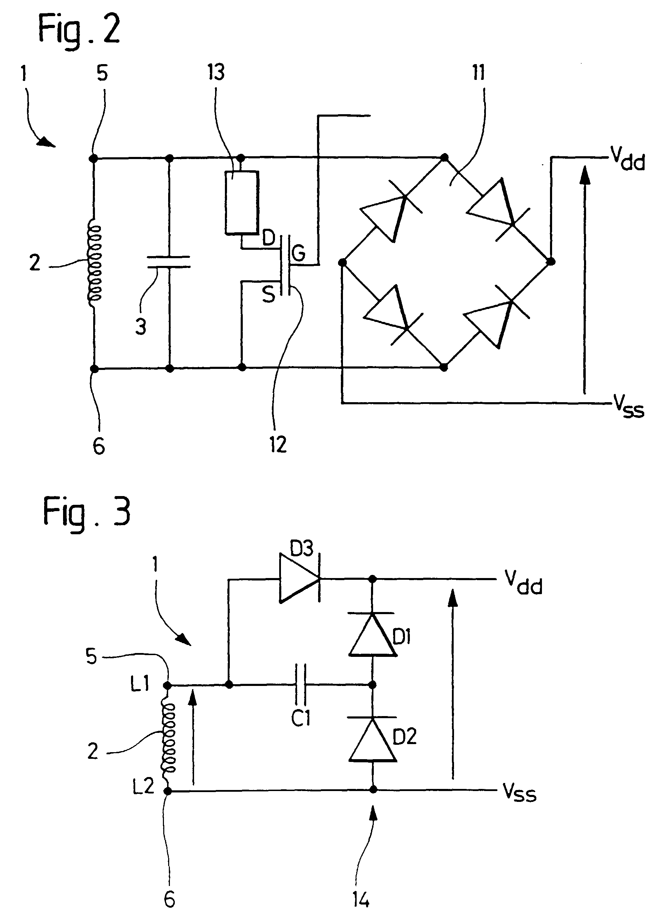

On se réfère à la figure 2 qui représente un schéma de l'interface d'entrée/sortie selon l'état de la technique, dans lequel les éléments identiques ou similaires à ceux de la figure 1 sont affectés d'un numéro de référence identique. Le schéma de la figure 2 fait appel à un pont de Gräetz 11 connecté en entrée aux bornes 5,6 de la bobine 2, et générant en sortie une tension continue Vdd-Vss.

On a également représenté dans cette figure un transistor 12 servant à moduler le champ radiofréquence en modulant le courant de bobine 2 à l'aide des informations binaires à lire à partir du transpondeur, qui sont amenées sur la grille G du transistor. Le transistor 12 est connecté en série avec une résistance 13.

Le montage d'interface 1 au pont de Gräetz 11 n'est pas très efficace pour des charges fortement résistives. En effet, la tension de sortie (Vdd-Vss) du pont est inférieure d'au moins une chute de tension de diode (0,7V) à l'amplitude de la tension d'entrée de la bobine 2. Or, du fait de la tension continue relativement faible lors de la modulation, le transistor de modulation 12 est fortement résistif dans des champs faibles. De ce fait il n'est pas recommandé d'ajouter une résistance 13 en série avec le transistor 12. Il en résulte que la résistance de modulation dans des faibles champs est élevée, ce qui entraîne une lente décroissance du courant de la bobine 2 et peut ainsi provoquer de fausses impulsions d'horloge. Cet effet devient encore plus critique du fait que la modulation n'a lieu que pendant une demi-onde de la tension de bobine. Il en résulte un décalage du point de fonctionnement du circuit d'extraction d'horloge 10.

On se réfère à la figure 3, représentant un autre schéma d'interface d'entrée/sortie selon l'état de la technique, qui utilise un étage redresseur 14 à doubleur de tension, une borne 6 de la bobine 2 étant connectée au substrat des circuits logiques du transpondeur. Le doubleur de tension 14 est plus efficace pour les faibles tensions de bobine que le montage de la figure 2, de sorte que les problèmes liés à la modulation sont moins apparents, la distance de fonctionnement étant plus élevée du fait de la tension de modulation plus élevée.

Cependant, comme la tension sur la borne 5 de la bobine 2 peut devenir inférieure au potentiel du substrat Vss, cette interface nécessite un circuit de modulation complexe présentant des risques de claquage. Pour la même raison, il n'est pas possible d'ajouter un circuit de protection standard sur la seconde borne 5 de la bobine 2.

En outre, la diode D3 doit être ajoutée afin de générer le courant élevé nécessaire pendant l'écriture. Cette diode est exposée à une tension inverse relativement élevée, d'environ trois fois l'amplitude de la tension d'entrée de bobine, lorsque le doubleur de tension 14 est connecté à une faible charge (non représentée). Ceci constitue un inconvénient important pour des conceptions à base de poly-diodes, qui présentent des tensions de claquage relativement faibles.

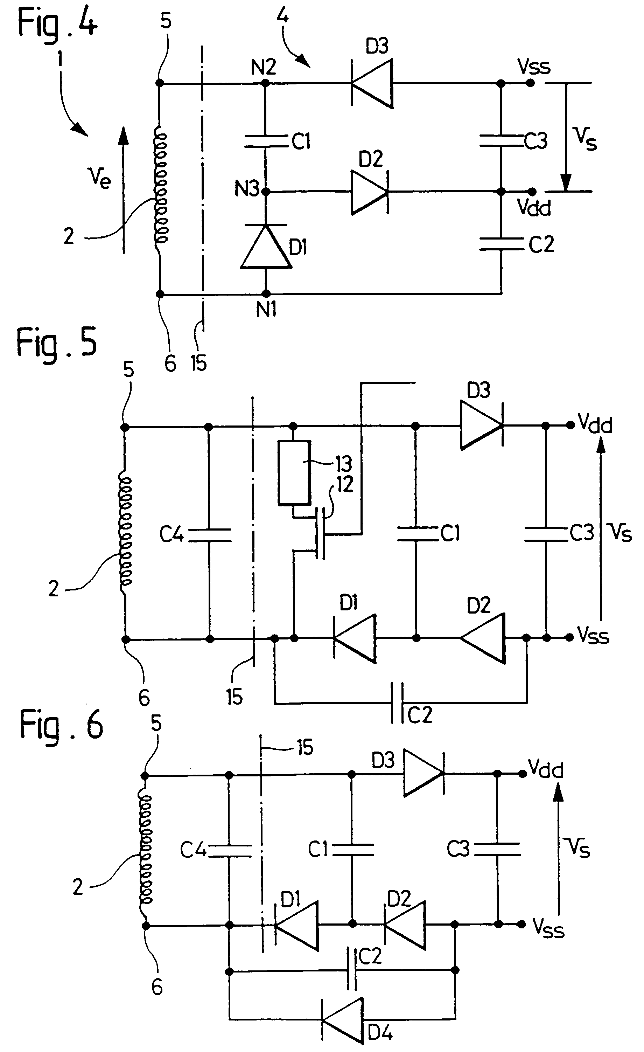

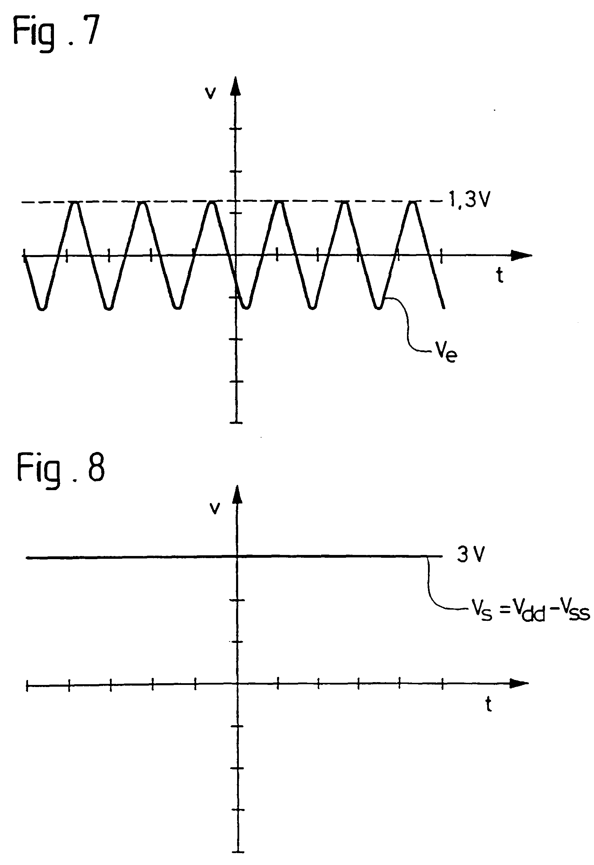

Une interface radiofréquence 1 selon l'invention est schématisée en figure 4. Comme précédemment, l'interface 1 comporte une bobine 2 et un convertisseur de tension 4 délimité par le trait interrompu 15. Selon l'invention, le convertisseur 4 est monté en multiplieur de tension, plus précisément en tripleur de tension dans l'exemple représenté, sans que cet exemple n'ait un caractère limitatif, puisque d'autres rapports de multiplication de tension peuvent être retenus par l'homme du métier en fonction des besoins spécifiques de l'application envisagée. Par multiplicateur de tension, on entend ici le fait que l'amplitude de la tension de sortie continue après redressement (Vs = Vdd-Vss) est approximativement un multiple entier de l'amplitude de la tension alternative d'entrée Ve. Dans l'exemple représenté, le convertisseur de tension 4 comporte un premier redresseur (D1,C1) qui charge le condensateur C1 sous une tension d'amplitude égale à l'amplitude de la tension d'entrée. L'étage redresseur (D1,C1) est suivi par un second étage redresseur (D2,C2) qui redresse à nouveau la tension de sortie du premier redresseur, de sorte que la tension de sortie du second redresseur aux bornes du condensateur C2 est maintenant d'amplitude double de celle de la tension d'entrée Ve. Enfin, le second étage redresseur (D2,C2) est suivi d'un troisième étage redresseur (D3,C3), dont la tension de sortie Vs = Vdd-Vss aux bornes de C3 est maintenant une tension continue d'amplitude triple de celle de la tension d'entrée alternative. Des signaux d'entrée Ve et de sortie Vs réels sont représentés respectivement en figures 7 et 8. La tension d'entrée d'une interface radiofréquence de transpondeur possède en général une amplitude comprise entre 1 et 20 Volts et une fréquence de l'ordre de 125 kHz à quelques MHz, et l'amplitude de la tension continue de sortie recherchée est de l'ordre de 1 à 5 Volts. La tension d'entrée possède dans l'exemple représenté une amplitude de l'ordre de 1,3 Volts. La tension de sortie continue Vs possède une amplitude de 3 Volts obtenue avec des composants réels (C1 = C2 = 560 pF; C3 = 1 nF), proche des 3,9 Volts théoriques qui seraient obtenus avec des composants idéaux, et bien supérieure à la tension continue qui serait obtenue à l'aide d'un convertisseur à pont de Graëtz (figure 2) ou à doubleur de tension (figure 3). Il en résulte que l'interface radiofréquence selon la figure 4 permet, pour une même tension d'entrée, d'augmenter la distance de fonctionnement du dispositif.

Selon l'invention, le montage du convertisseur de tension 4 est réalisé de façon que les bornes 5,6 de la bobine 2 sont à un potentiel flottant par rapport au potentiel du substrat Vss. Ainsi, à la différence du montage de l'état de la technique (figure 2), aucune des bornes 5,6 de la bobine 2 ne passe sous le potentiel Vss, de sorte qu'aucune des diodes des étages redresseurs n'est exposée à une tension inverse d'amplitude supérieure au double de l'amplitude de la tension d'entrée, de sorte que les tensions de claquage des diodes des étages redresseurs risquent moins d'être atteintes, même en cas d'utilisation de poly-diodes.

La figure 5 représente une variante de l'interface 1 de la figure 4, dans laquelle on a représenté le transistor de modulation 12 du convertisseur de tension, ainsi qu'une résistance 13 connectée en série avec lui. Cet arrangement de modulation très simple est possible du fait que pendant le fonctionnement normal de l'interface 1, aucune des bornes 5,6 de la bobine 2 ne présente un potentiel situé à l'extérieur de la plage comprise entre Vss-0,7 V et Vdd+0,7 V.

Pour les mêmes raisons, des dispositifs de protection habituels contre les décharges électrostatiques peuvent être connectés aux deux bornes de la bobine 2.

En outre, du fait de la tension de sortie continue Vs plus élevée que dans le cas de l'interface de la figure 2, le transistor de modulation 12 présente une résistance à l'état passant plus faible, de sorte qu'une résistance 13 peut être utilisée pour obtenir une diminution rapide du courant de bobine 2 dans toutes les conditions de fonctionnement. Cette diminution rapide se traduit par un signal aisément détectable dans le dispositif de lecture extérieur, tout en réduisant le risque de signaux d'horloge erronés dans l'interface 1, puisqu'il reste toujours une amplitude de tension suffisante entre les bornes 5,6 de la bobine pour extraire le signal d'horloge dans de bonnes conditions.

Il est à noter qu'on a également représenté dans la figure 5 un condensateur C4 connecté aux bornes de la bobine 2, de façon à former entre la bobine et le condensateur C4 un circuit résonant de même fréquence que celle du champ électromagnétique, permettant d'améliorer le facteur de couplage et donc d'utiliser moins d'énergie pour la transmission d'informations entre le transpondeur et le dispositif de lecture extérieur. En outre, la polarité des diodes D1,D2,D3 est inversée par rapport à celle correspondant à la figure 4, cette inversion étant due à une technologie de jonction de type p plutôt que de type n.

La figure 6 se rapporte à une variante supplémentaire de l'interface selon l'invention, dans laquelle le transistor de modulation 12 n'a pas été représenté à des fins de simplicité. Dans le mode de réalisation représenté, il est tenu compte de la diode parasite D4 présente sur le substrat entre la bobine 2 et la sortie de l'interface 1. Selon l'invention, cette diode D4 est utilisée comme un redresseur simple alternance, permettant de réduire de 0,7 Volt la chute de tension pendant l'écriture vers le transducteur. En effet, dans ce cas, au lieu d'avoir D1,D2,D3 connectées en série, il ne reste que D3 et D4, de sorte que la tension continue de sortie Vs est encore plus élevée que dans le cas de la figure 5. En outre, comme les diodes de substrat, du type de D4, ont des tensions de claquage plus élevées que les poly-diodes qui sont flottantes par rapport au substrat du transpondeur, il n'y a pas de risque de claquage.

De ce qui précède, il ressort que l'interface radiofréquence selon l'invention remplit parfaitement les objectifs fixés. Elle permet de combiner les avantages des montages connus à pont de Gräetz et à doubleur, tout en évitant leurs inconvénients. En particulier, aucune des diodes de l'étage redresseur de l'interface n'est exposée à une tension inverse supérieure à deux fois la tension aux bornes de la bobine d'entrée/sortie. De ce fait le risque de claquage est inférieur à ce qu'il est dans le cas d'une interface à doubleur de tension, même en utilisant des poly-diodes.

En outre, la tension continue de sortie est plus élevée, pour une même tension d'entrée au niveau de la bobine. Il en résulte que la distance de fonctionnement du transpondeur est augmentée dans de grandes proportions pour aller de quelques centimètres jusqu'à plusieurs mètres. De plus, le courant disponible pour le transpondeur est plus élevé, de sorte que le transpondeur peut comporter un microprocesseur.

## Revendications

1. Dispositif (1) d'interface radiofréquence d'un transpondeur, comportant une bobine (2) formant l'antenne du transpondeur et un circuit convertisseur de tension (4) connecté d'une part aux bornes (5,6) de ladite bobine (2) et d'autre part aux bornes (Vdd,Vss) d'alimentation en tension continue d'un circuit logique intégré (7) du transpondeur, caractérisé en ce que les bornes (5,6) de la bobine (2) sont connectées à des potentiels flottants par rapport au substrat du transpondeur, de sorte que le potentiel d'aucune des bornes (5,6) de la bobine (2) ne passe en-dessous du potentiel (Vss) du substrat, et en ce que ledit convertisseur de tension (4) est un tripleur de tension qui comporte un premier redresseur (D1,C1) connecté aux bornes (5,6) de la bobine et constitué par une première diode (D1) en série avec un premier condensateur (C1), un second redresseur (D2,C2) connecté aux bornes de la première diode (D1) et constitué par une seconde diode (D2) en série avec un second condensateur (C2), et un troisième redresseur (D3,C3) connecté entre aux bornes du premier condensateur (C1) et constitué par une troisième diode (D3) en série avec un troisième condensateur (C3).

2. Dispositif (1) selon la revendication 1, caractérisé en ce qu'il comporte un transistor de modulation (12) dont le drain (D) et la source (S) sont connectés entre les bornes (5,6) de la bobine (2), et dont la grille (S) est alimentée par un signal de modulation issu du circuit intégré (7) du transpondeur.

3. Dispositif selon la revendication 2, caractérisé en ce que ledit transistor de modulation (12) est connecté en série avec une résistance (13), de sorte que le courant de la bobine (2) varie rapidement de façon à moduler le champ radiofréquence.

4. Dispositif (1) selon l'une quelconque des revendications précédentes, caractérisé en ce qu'une diode de substrat (D4) est connectée entre une borne (6) de la bobine (2) et le substrat du transpondeur, en parallèle auxdites premières et secondes diodes (D1,D2), de façon à diminuer la chute de tension d'écriture de l'ordre de 0,7V.

5. Dispositif (1) selon la revendication précédente, caractérisé en ce qu'un condensateur (C4) est connecté aux bornes (5,6) de la bobine (2), de façon à former un circuit résonant améliorant la transmission d'énergie entre le transpondeur et un lecteur extérieur.

6. Dispositif transpondeur, caractérisé en ce qu'il comporte un dispositif d'interface (1) selon l'une quelconque des revendications précédentes.

7. Dispositif transpondeur selon la revendication 6, caractérisé en ce qu'il comporte un microprocesseur.

## Patentansprüche

1. Radiofrequenzschnittstellenvorrichtung (1) für einen Transponder, umfassend eine die Antenne des Transponders bildende Spule (2) und eine Spannungswandlerschaltung (4), die einerseits mit den Anschlußklemmen (5, 6) der Spule (2) und andererseits mit den Gleichspannungsversorgungsklemmen (Vdd, Vss) eines intergrierten Logikschaltkreises (7) des Transponders verbunden ist, dadurch gekennzeichnet, daß die Anschlußklemmen (5, 6) der Spule (2) an in Bezug auf das Substrat des Transponders schwimmende Potentiale angeschlossen sind, so daß das Potential von jeder der Anschlußklemmen (5, 6) das Potential (Vss) des Substrats nicht unterschreitet, und so daß der Spannungswandler (4) ein Spannungsverdreifacher ist, der einen mit den Anschlußklemmen (5, 6) der Spule (2) verbundenen und aus einer ersten Diode (D1) in Reihe mit einem ersten Kondensator (C1) bestehenden ersten Gleichrichter (D1, C1), einen mit den Anschlußklemmen der ersten Diode (D1) verbundenen und aus einer zweiten Diode (D2) in Reihe mit einem zweiten Kondensator (C2) bestehenden zweiten Gleichrichter (D2, C2) und einen zwischen den Anschlußklemmen des ersten Kondensators (C1) geschalteten und aus einer dritten Diode (D3) in Reihe mit einem dritten Kondensator (C3) bestehenden dritten Gleichrichter (D3, C3) umfaßt.

2. Vorrichtung (1) nach Anspruch 1, dadurch gekennzeichnet, daß sie einen Modulationstransistor (12) umfaßt, dessen Drain (D) und Source (S) zwischen den Anschlußklemmen (5, 6) der Spule (2) geschaltet sind und dessen Gate (6) durch ein vom integrierten Schaltkreis (7) des Transponders ausgehendes Modulationssignal gespeist wird.

3. Vorrichtung nach Anspruch 2, dadurch gekennzeichnet, daß der Modulationstransistor (12) in Reihe mit einem Widerstand (13) geschaltet ist, so daß sich der Strom der Spule (2) schnell zur Modulation des Radiofrequenzfeldes ändert.

4. Vorrichtung (1) nach einem der vorhergehenden Ansprüche, dadurch gekennzeichnet, daß eine Substratdiode (4) zwischen einer Anschlußklemme (6) der Spule (2) und dem Substrat des Transponders parallel zu den ersten und zweiten Dioden (D1, D2) geschaltet ist, so daß der Schreibspannungsabfall um die Größe von 0,7 V verringert wird.

5. Vorrichtung (1) nach dem vorhergehenden Anspruch, dadurch gekennzeichnet, daß ein Kondensator (C4) mit den Anschlußklemmen (5, 6) der Spule (2) verbunden ist, so daß ein die Energieübertragung zwischen dem Transponder und einem außerhalb befindlichen Lesegerät verbessernd er Resonanzkreis gebildet wird.

6. Transpondervorrichtung, dadurch gekennzeichnet, daß sie eine Schnittstellenvorrichtung (1) gemäß einem der vorhergehenden Ansprüche umfaßt.

7. Transpondervorrichtung nach Anspruch 6, dadurch gekennzeichnet, daß sie einen Mikroprozessor umfaßt.

## Claims

1. Radio frequency interface device (1) for a transponder, comprising a coil (2) forming the antenna of the transponder and a voltage converting circuit (4) connected, on the one hand, to the terminals (5, 6) of said coil (2) and, on the other hand, to continuous voltage supply terminals (V_{dd}, Vₛₛ) of an integrated logic circuit (7) of the transponder, characterized in that the terminals (5, 6) of the coil (2) are connected to floating potentials with respect to the substrate of the transponder in such a way that none of the terminals (5, 6) of the coil (2) have a potential which passes below the potential (Vₛₛ) of the substrate, and in that said voltage converting circuit (4) is a voltage tripler which comprises a first rectifier (D1, C1) connected to the terminals (5, 6) of the coil and which is constituted by a first diode (D1) connected in series with a first capacitor (C1), a second rectifier (D2, C2) connected to the terminals of the first diode (D1) and constituted by a second diode (D2) in series with a second capacitor (C2), and a third rectifier (D3, C3) connected to the terminals of the first capacitor (C1) and constituted by a third diode (D3) in series with a third capacitor (C3).

2. Device (1) according to claim 1, characterized in that it comprises a modulation transistor (12) the drain (D) and the source (S) of which are connected to the terminals (5, 6) of the coil (2) and the gate (G) of which is supplied with the modulation signal coming from the integrated circuit (7) of the transponder.

3. Device according to claim 2, characterized in that said modulation transistor (12) is connected in series with a resistance (13), in such a way that the current of the coil (2) varies rapidly so as to cause a modulation of the radio frequency field.

4. Device (1) according to any one of the preceding claims, characterized in that a substrate diode (D4) is connected between the terminal (6) of the coil (2) and the substrate of the transponder, in parallel to said first and second diodes (D1, D2) in such a way so as to reduce the writing voltage drop by about 0.7 volts.

5. Device (1) according to any one of the preceding claims, characterized in that a capacitor (C4) is connected to the terminals (5, 6) of the coil (2) so as to form a resonance circuit which improves the energy transmission between the transponder and an external reader.

6. Transponder device, characterized in that it comprises an interface device (1) according to any one of the preceding claims.

7. Transponder device according to claim 6, characterized in that it comprises a microprocessor.
